# EUROPÄISCHE PATENTSCHRIFT

(11) **EP 4 653 221 B1**
(45) Veröffentlichungstag und Bekanntmachung des Hinweises auf die Patenterteilung: **26.08.2026**
(21) Anmeldenummer: 25166825.7
(22) Anmeldetag: 27.03.2025
(51) Int. Cl.: B60K 15/00, B60L 50/60, B60L 58/30

(54) **STEUERVORRICHTUNG UND VERFAHREN ZUM STEUERN EINES BETRIEBS EINES KRAFTFAHRZEUGS VOR UND WÄHREND EINES TANKVORGANGS**
CONTROL DEVICE AND METHOD FOR CONTROLLING THE OPERATION OF A MOTOR VEHICLE BEFORE AND DURING A REFUELING PROCESS
DISPOSITIF DE COMMANDE ET PROCÉDÉ DE COMMANDE DU FONCTIONNEMENT D'UN VÉHICULE AUTOMOBILE AVANT ET PENDANT UN PROCESSUS DE RAVITAILLEMENT EN CARBURANT

(30) Priorität: 29.04.2024 DE 102024111977
(43) Veröffentlichungstag der Anmeldung: 26.11.2025
(73) Patentinhaber: Bayerische Motoren Werke Aktiengesellschaft, 80809 München (DE)
(72) Erfinder: Ludwiczek, Kilian, 80637 München (DE); Bacherler, Andreas, 87600 Kaufbeuren (DE); Eulenbach, Nils, 84174 Eching (DE)

(56) Entgegenhaltungen:
- CN-A- 103 164 893
- CN-A- 104 972 897
- DE-A1- 102015 106 316
- DE-A1- 102017 209 675
- US-A1- 2014 191 718

## Beschreibung

Die vorliegende Offenbarung betrifft eine Steuervorrichtung zum Steuern eines Betriebs eines Kraftfahrzeugs vor und während eines Tankvorgangs des Kraftfahrzeugs, ein Kraftfahrzeug, das die Steuervorrichtung umfasst, und/oder ein Verfahren zum Steuern eines Betriebs eines Kraftfahrzeugs vor und während eines Tankvorgangs des Kraftfahrzeugs. Zusätzlich, oder alternativ, wird ein Computerprogramm bereitgestellt, das Befehle umfasst, die bei der Ausführung des Programms durch einen Computer diesen dazu veranlassen, das Verfahren zumindest teilweise auszuführen. Zusätzlich, oder alternativ, wird ein computerlesbares Medium bereitgestellt, das Befehle umfasst, die bei der Ausführung der Befehle durch einen Computer diesen dazu veranlassen, das Verfahren zumindest teilweise auszuführen.

Bei konventionellen Kraftfahrzeugen wird ein Tankvorgang durch das direkte Öffnen der jeweiligen Tankklappe begonnen. Im Normalfall ist ein sofortiges Öffnen möglich, sodass ein Tankvorgang unverzüglich erfolgen kann.

Dies ist jedoch z. B. bei Brennstoffzellenfahrzeigen nicht möglich, das die jeweilige Brennstoffzelle u. a. aufgrund Regulatorik bei einem Tankvorgang abgeschaltet sein muss. Der Abschaltvorgang der Brennstoffzelle benötigt eine gewisse Zeit, sodass bis dahin auch die Tankklappe geschlossen bleiben muss. Somit ergibt sich eine Wartezeit, bis der Tankvorgang begonnen werden kann.

Neben der Wartezeit können auch andere technische Gründe dazu führen, dass ein Beginn des Tankvorgangs aus technischen Gründen nicht immer sofort möglich. In solchen Situationen hat der Nutzer üblicherweise keine Möglichkeit, die Situation zu begreifen, z. B. warum die Tankklappe nicht geöffnet werden kann.

Druckschrift DE 10 2017 209 675 A1 offenbart eine Steuereinheit für ein Brennstoffzellensystem. Die Steuereinheit ist eingerichtet, Status-Information in Bezug auf einen Tankvorgang zur Betankung des Druckbehälters zu ermitteln und den Brennstoffzellenstapel in Abhängigkeit von der Status-Information zu aktivieren.

Druckschrift US 2014/191718 A1 offenbart eine sichere Authentifizierung für das Betanken von Fahrzeugen.

Druckschrift DE 10 2015 106 316 A1 offenbart eine Fahrzeugkomponente für ein Fahrzeug mit einem Energiespeicher.

Druckschrift CN 104 972 897 A offenbart ein Tankmodul.

Druckschrift CN 103 164 893 A offenbart eine Deckelverschlusssteuerung.

Vor dem Hintergrund dieses Standes der Technik besteht die Aufgabe der vorliegenden Offenbarung darin, eine Vorrichtung und/oder ein Verfahren anzugeben, die jeweils geeignet sind, den Stand der Technik zu bereichern.

Gelöst wird die Aufgabe durch die Merkmale der unabhängigen Ansprüche. Die nebengeordneten Ansprüche und die Unteransprüche haben jeweils optionale Weiterbildungen der Offenbarung zum Inhalt.

Danach wird die Aufgabe durch eine Steuervorrichtung zum Steuern eines Betriebs eines Kraftfahrzeugs vor und während eines Tankvorgangs des Kraftfahrzeugs gelöst.

Die Steuervorrichtung ist ausgestaltet, um einen Wunsch zur Durchführung des Tankvorgangs zu erfassen (z. B. während sich das Kraftfahrzeug im Stillstand befindet).

Die Steuervorrichtung ist ausgestaltet, um eine Vorbereitung des Kraftfahrzeugs für den Tankvorgang zu initiieren, sobald der Wunsch zur Durchführung des Tankvorgangs erfasst worden ist.

Die Steuervorrichtung ist ausgestaltet, um zumindest eine Beleuchtungseinrichtung und/oder Ausgabeeinrichtung des Kraftfahrzeugs anzusteuern, zumindest ein erstes Signal auszugeben, sobald die Vorbereitung initiiert worden ist.

Die Steuervorrichtung ist ausgestaltet, um die zumindest eine Beleuchtungseinrichtung und/oder Ausgabeeinrichtung anzusteuern, entweder zumindest ein zweites Signal auszugeben, wenn die initiierte Vorbereitung fehlerlos beendet worden ist und der Tankvorgang begonnen werden kann, oder zumindest ein drittes Signal auszugeben, wenn die initiierte Vorbereitung nicht fehlerlos beendet worden ist und der Tankvorgang nicht möglich ist. Das zumindest eine erste Signal, das zumindest eine zweite Signal und das zumindest eine dritte Signal sind sich voneinander unterscheidende visuelle und/oder akustische Signale.

Die Steuervorrichtung bzw. Steuereinheit kann Teil des Fahrassistenzsystems sein oder dieses darstellen. Bei der Steuervorrichtung kann es sich beispielsweise um eine elektronische Steuereinheit (engl. ECU = electronic control unit) handeln. Die elektronische Steuereinheit kann eine intelligente prozessorgesteuerte Einheit sein, die z. B. über ein Central Gateway (CGW) mit anderen Modulen kommunizieren kann und die ggf. über Feldbusse, wie den CAN-Bus, LIN-Bus, MOST-Bus, FlexRay und/oder über das Automotive-Ethernet, z. B. zusammen mit Telematiksteuergeräten und/oder einer Umfeldsensorik, das Fahrzeugbordnetz bilden kann.

Denkbar ist, dass die Steuervorrichtung für das Fahrverhalten des Kraftfahrzeugs relevante Funktionen, wie die Lenkung, die Motorsteuerung, die Kraftübertragung, und/oder das Bremssystem, steuert. Außerdem können Fahrerassistenzsysteme, wie beispielsweise ein Parkassistent, eine angepasste Geschwindigkeitsregelung (ACC, engl. Adaptive Cruise Control), ein Spurhalteassistent, ein Spurwechselassistent, eine Verkehrszeichenerkennung, eine Lichtsignalerkennung, ein Anfahrassistent, ein Nachtsichtassistent und/oder ein Kreuzungsassistent, von der Steuervorrichtung gesteuert werden.

Die oben beschriebene Steuervorrichtung bietet eine Reihe von Vorteilen. Unter anderem wird eine verbesserte Technik bereitgestellt, die es ermöglicht, einen Nutzer, z. B. den Fahrer des Kraftfahrzeugs, vor und gegebenenfalls während eines Tankvorgangs adäquat zu informieren, um die Situation begreifen und richtig reagieren bzw. agieren zu können. Konkret kann der Nutzer anhand der verschiedenen Signale z. B. am Ort der Nutzerinteraktion (z. B. an einer Tankklappe des Kraftfahrzeugs, die er für den Tankvorgang öffnen möchte bzw. öffnet) informiert werden, wenn sein Wunsch zur Durchführung des Tankvorgangs erfasst worden ist und der anschließend initiierte Vorbereitung für den Tankvorgang fehlerlos beendet werden konnte oder ein Fehlerfall eingetreten ist. So kann der Nutzer, wenn er sich z. B. an der Tankklappe befindet, durch die verschiedenen Signale erkennen, wenn er mit den Tankvorgang beginnen kann oder ein Tankvorgang aufgrund eines Fehlerfalls nicht möglich ist.

Nachfolgend werden mögliche Weiterbildungen der oben beschriebenen Steuervorrichtung im Detail erläutert.

Das Kraftfahrzeug kann ein Brennstoffzellenfahrzeug sein. Die Steuervorrichtung kann ausgestaltet sein, um während der initiierten Vorbereitung zu überprüfen, ob ein Abschaltvorgang eines Brennstoffzellensystems des Brennstoffzellenfahrzeugs fehlerlos beendet worden ist. Die Steuervorrichtung kann ausgestaltet sein, um festzustellen, dass die initiierte Vorbereitung fehlerlos beendet worden ist, sofern der Abschaltvorgang fehlerlos beendet worden ist.

Die Steuervorrichtung kann ausgestaltet sein, um den Wunsch zur Durchführung des Tankvorgangs durch ein Erfassen eines Antippens und/oder Öffnungsversuchs einer Tankklappe des Kraftfahrzeugs zu erfassen.

Das zumindest eine erste Signal, das zumindest eine zweite Signal und das zumindest eine dritte Signal können außerhalb des Kraftfahrzeugs und/oder an einer Tankklappe des Kraftfahrzeugs wahrnehmbar sein.

Die Steuervorrichtung kann ausgestaltet sein, um ein Öffnen einer Tanklappe des Kraftfahrzeugs zu initiieren und/oder zu erlauben, wenn die initiierte Vorbereitung fehlerlos beendet worden ist und der Tankvorgang begonnen werden kann.

Die Steuervorrichtung kann ausgestaltet sein, um die zumindest eine Beleuchtungseinrichtung und/oder Ausgabeeinrichtung anzusteuern, zumindest ein viertes Signal auszugeben, wenn der Tankvorgang beendet worden ist.

Die zumindest eine Beleuchtungseinrichtung kann eine Außenbeleuchtung und/oder eine Innenraumbeleuchtung des Kraftfahrzeugs zur Ausgabe des zumindest einen ersten Signals, des zumindest einen zweiten Signals und des zumindest einen dritten Signals (und optional des zumindest einen vierten Signals) als sich voneinander unterscheidende visuelle Signale umfassen.

Die zumindest eine Ausgabeeinrichtung kann eine Lautsprechereinrichtung des Kraftfahrzeugs zur Ausgabe des zumindest einen ersten Signals, des zumindest einen zweiten Signals und des zumindest einen dritten Signals (und optional des zumindest einen vierten Signals) als sich voneinander unterscheidende akustische Signale umfassen.

Das zumindest eine erste Signal kann ein Blinken der zumindest einen Beleuchtungseinrichtung, z. B. der Außenbeleuchtung und/oder der Innenraumbeleuchtung, mit einer vorgegebenen ersten Frequenz umfassen. Beispielsweise können die Außenbeleuchtung und die Innenraumbeleuchtung gleichzeitig (bzw. synchron) mit der ersten Frequenz blinken, wobei z. B. denkbar ist, dass die Innenraumbeleuchtung unterschiedliche Farben aufweist und z. B. mit blau-grüner Farbe blinkt.

Das zumindest eine erste Signal kann eine Ausgabe eines ersten Tons durch zumindest eine Ausgabeeinrichtung, z. B. die Lautsprechereinrichtung, umfassen.

Das zumindest eine zweite Signal kann ein dauerhaftes Aufleuchten der Außenbeleuchtung (z. B. während des gesamten Tankvorgangs) umfassen. Alternativ, oder ergänzend, kann das zumindest eine zweite Signal eine Ausgabe eines zweiten Tons durch die Lautsprechereinrichtung, der sich von dem ersten Ton unterscheidet, und/oder ein Aufflackern bzw. ein kurzes starkes Aufleuchten der Innenraumbeleuchtung umfassen.

Das zumindest eine dritte Signal kann ein Blinken der zumindest einen Beleuchtungseinrichtung, z. B. der Außenbeleuchtung und/oder der Innenraumbeleuchtung, mit einer vorgegebenen zweiten Sequenz, die sich von der ersten Frequenz unterscheidet, und optional ein anschließendes Ausschalten der zumindest einen Beleuchtungseinrichtung umfassen. Alternativ, oder ergänzend kann das zumindest eine dritte Signal eine Ausgabe eines Warntons durch die Lautsprechereinrichtung umfassen.

Das zumindest eine vierte Signal kann ein Ausschalten der Außenbeleuchtung und/oder ein Ausschalten oder zumindest einfaches (z. B. zweifaches) Blinken der Innenraumbeleuchtung umfassen.

Das zumindest eine vierte Signal kann eine Ausgabe eines dritten Tons durch die Lautsprechereinrichtung, die sich von dem ersten und/oder zweiten Ton unterscheidet, umfassen. Der dritte Ton kann z. B. eine Bestätigungston sein, dass die Tankklappe geschlossen ist. Denkbar ist, dass die Lautsprechereinrichtung ferner einen vierten Ton vor dem Ende des Tankvorgangs ausgeben kann, der sich von dem dritten Ton unterscheidet und z. B. eine Bestätigungston, dass der Tank des Kraftfahrzeugs voll ist, sein kann.

Die Steuervorrichtung kann ausgestaltet sein, um einen Bildschirm in einem Innenraum des Kraftfahrzeugs anzusteuern, Informationen über einen Status der Vorbereitung des Kraftfahrzeugs und einen Status des Tankvorgangs auszugeben. Es ist denkbar, dass die Steuervorrichtung ausgestaltet sein kann, um den Bildschirm anzusteuern eine Fehlermeldung und z. B. Informationen über einen Fehlerfall (der während der initiierten Vorbereitung eingetreten ist) auszugeben, wenn die initiierte Vorbereitung nicht fehlerlos beendet worden ist. Die Informationen können z. B. Anweisungen zur Fehlerbehebung des Fehlerfalls umfassen.

Wie zuvor erwähnt, kann das Kraftfahrzeug ein Brennstoffzellenfahrzeug sein. Die Steuervorrichtung kann ausgestaltet sein, um eine aktuelle Position des Brennstoffzellenfahrzeugs zu erhalten, während sich das Brennstoffzellenfahrzeug in einem Fahrbetrieb (bzw. in Bewegung) befindet, und digitale Kartendaten abzurufen, wobei die digitalen Kartendaten Positionen von Wasserstofftankstellen anzeigen.

Die Steuervorrichtung kann ausgestaltet sein, um anhand der erhaltenen aktuellen Position des Brennstoffzellenfahrzeugs und der abgerufenen digitalen Kartendaten zu bestimmen, ob sich eine der Wasserstofftankstellen in einer Umgebung des Brennstoffzellenfahrzeugs befindet und/oder das Brennstoffzellenfahrzeug sich einer der Wasserstofftankstellen nähert.

Die Steuervorrichtung kann ausgestaltet sein, um einen potenziell bevorstehenden Tankvorgang des Brennstoffzellenfahrzeugs vorauszusagen, sofern bestimmt worden ist, dass sich eine der Wasserstofftankstellen in der Umgebung des Brennstoffzellenfahrzeugs befindet und/oder das Brennstoffzellenfahrzeug sich einer der Wasserstofftankstellen nähert.

Die Steuervorrichtung kann ausgestaltet sein, um eine Abschaltvorgang eines Brennstoffzellensystems des Brennstoffzellenfahrzeugs zu initiieren, sofern der potenziell bevorstehende Tankvorgang vorausgesagt worden ist.

Dadurch kann unter anderem eine verbesserte Technik bereitgestellt werden, die es ermöglicht, einen Tankvorgang des Brennstoffzellenfahrzeugs möglichst ohne Wartezeit bzw. ohne Verzug beginnen zu können. So wird durch ein vorausschauendes und frühzeitiges Initiieren eines Abschaltvorgangs des Brennstoffzellensystems des Brennstoffzellenfahrzeugs, während sich das Brennstoffzellenfahrzeug noch im Fahrbetrieb befindet und auf eine Wasserstofftankstelle zufährt, sichergestellt, dass der Abschaltvorgang beendet ist, wenn das Brennstoffzellenfahrzeug die Wasserstofftankstelle erreicht hat und ein Nutzer, z. B. der Fahrer, mit dem Tankvorgang beginnen möchte.

Die aktuelle Position des Brennstoffzellenfahrzeugs (z. B. anhand von GPS-Positionsdaten) und die digitalen Kartendaten können von einer Navigationsvorrichtung des Brennstoffzellenfahrzeugs bereitgestellt werden. Unter der Navigationsvorrichtung kann eine Vorrichtung verstanden werden, die anhand der aktuellen Position und den digitalen Kartendaten eine Routenerstellung und Zielführung zu einem gewählten Zielort ermöglicht. Der Zielort kann von einem Nutzer z. B. über eine Eingabeeinheit des Brennstoffzellenfahrzeugs ausgewählt bzw. angegeben werden. Die digitalen Kartendaten können Informationen zu Straßennetzen und Orten von Interesse (engl. "points of interests", POIs) aufweisen, wobei die Orte von Interesse Wasserstofftankstellen (bzw. deren Positionen) umfassen können. Die digitalen Kartendaten können z. B. aus einem Speicher der Navigationsvorrichtung bzw. des Brennstoffzellenfahrzeugs und/oder von externen Einrichtungen abrufbar sein.

Die Steuervorrichtung kann ausgestaltet sein, um den Abschaltvorgang des Brennstoffzellensystems derart zu initiieren, dass der Abschaltvorgang bei einer Ankunft an einer der Wasserstofftankstellen beendet ist und/oder ein Tankvorgang des Brennstoffzellenfahrzeugs bei einer Ankunft an einer der Wasserstofftankstellen ohne Wartezeit durchführbar ist.

Die Steuervorrichtung kann ausgestaltet sein, um den Abschaltvorgang des Brennstoffzellensystems in Abhängigkeit von einer Fahrgeschwindigkeit des Brennstoffzellenfahrzeugs, einer Reststrecke des Brennstoffzellenfahrzeugs bis zu einer der Wasserstofftankstellen und/oder einer erwarteten Restfahrzeit des Brennstoffzellenfahrzeugs zu einer der Wasserstofftankstellen zu initiieren.

Die Steuervorrichtung kann ausgestaltet sein, um den Abschaltvorgang des Brennstoffzellensystems zu initiieren, sofern eine Traktionsbatterie des Brennstoffzellenfahrzeugs einen ausreichenden Ladezustand zum Betreiben einer elektrischen Maschine des Brennstoffzellenfahrzeugs zum Erreichen des Brennstoffzellenfahrzeugs an einer der Wasserstofftankstellen aufweist.

Das oben Beschriebene lässt sich mit anderen Worten und auf eine mögliche konkretere Ausgestaltung der Offenbarung wie nachfolgend beschrieben zusammenfassen, wobei die nachfolgende Beschreibung als für die Offenbarung nicht einschränkend auszulegen ist.

Wasserstofftankstellen können als Orte von Interesse (engl. "points of interests", POIs) betrachtet werden. Dadurch kann vorzeitig ermittelt werden, ob sich das Kraftfahrzeug an bzw. in der Nähe einer Wasserstofftankstelle befindet. Hierzu kann über die Betriebsstrategie über die Erkennung des POIs schon die Brennstoffzelle bzw. das Brennstoffzellensystem vorausschauend abgeschaltet werden.

Beispielsweise kann das Kraftfahrzeug eine Wasserstofftankstelle anfahren. Der POI kann erkannt werden und es kann ein Signal (z. B. an einen Betriebskoordinator) übermittelt werden, welches die Brennstoffzelle bzw. das Brennstoffzellensystem des Kraftfahrzeugs zur Abschaltung bringt. Das Kraftfahrzeug kann mittels einer elektrischen Maschine an eine Zapfsäule der Wasserstofftankstelle fahren, wo ein Tankwunsch geäußert werden kann (z. B. durch ein Antippen einer Tankklappe des Kraftfahrzeugs von außen). Die Tankklappe kann aufgrund der vorrausschauenden Abschaltung der Brennstoffzelle ohne Verzug, d. h. ohne Wartezeit, öffnen.

Zusätzlich, oder alternativ, zur vorrausschauenden Abschaltung kann ein Nutzer am Ort einer Nutzerinteraktion adäquat informiert werden, um die Situation begreifen zu können und richtig reagieren bzw. agieren zu können.

Beispielsweise kann der Nutzer einen Tankvorgang an der Tankklappe beginnen. Sowohl bei einem ordnungsgemäßen Zustand (d. h. "in Ordnung", i. O.) als auch bei einem nicht ordnungsgemäßen Zustand (d. h. "nicht in Ordnung", n. i. O.) kann der Nutzer über einen Status des Tankvorgangs informiert werden, z. B. mittels von der Tanklappe aus einer sichtbaren Außen- bzw. Innenbeleuchtung des Kraftfahrzeugs, akustische Ausgaben und/oder visuelle Ausgaben (über etwaige Displays).

Ferner wird ein Kraftfahrzeug bereitgestellt, das die oben beschriebene Steuervorrichtung umfasst.

Das Kraftfahrzeug kann ein Brennstoffzellenfahrzeug sein. Das Kraftfahrzeug kann ein Brennstoffzellensystem umfassen. Das Brennstoffzellensystem kann zur Erzeugung von elektrischer Energie für eine elektrischen Maschine (als Antriebsmaschine des Kraftfahrzeugs) ausgestaltet sein.

Das Kraftfahrzeug kann die zumindest eine Beleuchtungseinrichtung und/oder die zumindest eine Ausgabeeinrichtung umfassen. Die zumindest eine Beleuchtungseinrichtung kann eine Außenbeleuchtung und/oder eine Innenraumbeleuchtung des Kraftfahrzeugs umfassen. Die zumindest eine Ausgabeeinrichtung kann eine Lautsprechereinrichtung des Kraftfahrzeugs umfassen.

Das Kraftfahrzeug kann die Tankklappe umfassen, die z. B. an einer Außenseite des Kraftfahrzeugs angeordnet (bzw. zugänglich) sein kann. Die Tankklappe kann als Verschluss für einen Zugang zu einem Kraftstofftank (z. B. Wasserstofftank) des Kraftfahrzeugs dienen.

Das Kraftfahrzeug kann die Navigationsvorrichtung, z. B. zur Bereitstellung der aktuellen Position des Kraftfahrzeugs und der digitalen Kartendaten, umfassen.

Das Kraftfahrzeug kann den Bildschirm im Innenraum des Kraftfahrzeugs umfassen.

Die Steuervorrichtung kann (optional direkt oder indirekt, z. B. über ein Bordnetz des Kraftfahrzeugs) signaltechnisch mit der zumindest einen Beleuchtungseinrichtung, der zumindest einen Ausgabeeinrichtung, dem Brennstoffzellensystem, der Tankklappe, der Navigationsvorrichtung und/oder dem Bildschirm verbunden sein.

Das Kraftfahrzeug kann automatisiert sein. Das Kraftfahrzeug kann ausgestaltet sein, um mittels der Steuervorrichtung eine Längsführung und/oder eine Querführung bei einem automatisierten Fahren des Kraftfahrzeugs zumindest teilweise und/oder zumindest zeitweise zu übernehmen.

Das automatisierte Fahren kann so erfolgen, dass die Fortbewegung des Kraftfahrzeugs (weitgehend) autonom erfolgt. Das automatisierte Fahren kann zumindest teilweise und/oder zeitweise durch die Steuervorrichtung gesteuert werden.

Denkbar ist, dass das Kraftfahrzeug durch ein Fahrassistenzsystem aktiv, z. B. durch eine Anpassung einer Ist-Lenkradposition, und optional passiv, z. B. durch eine Anzeige eines Abbiegehinweises, in die Querführung des Kraftfahrzeugs eingreift.

Das Kraftfahrzeug kann ein Kraftfahrzeug der Autonomiestufe 0 sein, d. h. der Fahrer übernimmt die dynamische Fahraufgabe, auch wenn unterstützende Systeme (z. B. ABS oder ESP) vorhanden sind.

Das Kraftfahrzeug kann ein Kraftfahrzeug der Autonomiestufe 1 sein, d. h. bestimmte Fahrerassistenzsysteme aufweisen, die den Fahrer bei der Fahrzeugbedienung unterstützen, wie beispielsweise der Abstandsregeltempomat (ACC).

Das Kraftfahrzeug kann ein Kraftfahrzeug der Autonomiestufe 2 sein, d. h. so teilautomatisiert sein, dass Funktionen wie automatisches Einparken, Spurhalten bzw. Querführung, allgemeine Längsführung, Beschleunigen und/oder Abbremsen von Fahrerassistenzsystemen übernommen werden.

Das Kraftfahrzeug kann ein Kraftfahrzeug der Autonomiestufe 3 sein, d. h. so bedingungsautomatisiert, dass der Fahrer das Kraftfahrzeug nicht durchgehend überwachen muss. Das Kraftfahrzeug führt selbstständig Funktionen wie das Auslösen des Blinkers, Spurwechsel und/oder Spurhalten durch. Der Fahrer kann sich anderen Beschäftigungen widmen, wird aber bei Bedarf innerhalb einer Vorwarnzeit vom System aufgefordert die Führung zu übernehmen.

Das Kraftfahrzeug kann ein Kraftfahrzeug der Autonomiestufe 4 sein, d. h. so hochautomatisiert sein, dass die Führung des Fahrzeugs dauerhaft vom System des Fahrzeugs übernommen wird. Werden die Fahraufgaben vom System nicht mehr bewältigt, kann der Fahrer aufgefordert werden, die Führung zu übernehmen.

Das Kraftfahrzeug kann ein Kraftfahrzeug der Autonomiestufe 5 sein, d. h. so vollautomatisiert, dass der Fahrer zum Erfüllen der Fahraufgabe nicht erforderlich ist. Außer zu dem Festlegen des Ziels und zu dem Starten des Systems ist kein menschliches Eingreifen erforderlich. Das Kraftfahrzeug kann ohne Lenkrad und Pedale auskommen.

Das oben mit Bezug zur Steuervorrichtung Beschriebene gilt analog auch für das Kraftfahrzeug und umgekehrt.

Ferner wird ein Verfahren zum Steuern eines Betriebs eines Kraftfahrzeugs vor und während eines Tankvorgangs des Kraftfahrzeugs bereitgestellt.

Das Verfahren umfasst ein Erfassen eines Wunschs zur Durchführung des Tankvorgangs (z. B. während sich das Kraftfahrzeug im Stillstand befindet).

Das Verfahren umfasst ein Initiieren einer Vorbereitung des Kraftfahrzeugs für den Tankvorgang, sobald der Wunsch zur Durchführung des Tankvorgangs erfasst worden ist.

Das Verfahren umfasst ein Ansteuern zumindest einer Beleuchtungseinrichtung und/oder Ausgabeeinrichtung des Kraftfahrzeugs, zumindest ein erstes Signal auszugeben, sobald die Vorbereitung initiiert worden ist.

Das Verfahren umfasst ein Ansteuern der zumindest einen Beleuchtungseinrichtung und/oder Ausgabeeinrichtung, entweder zumindest ein zweites Signal auszugeben, wenn die initiierte Vorbereitung fehlerlos beendet worden ist und der Tankvorgang begonnen werden kann, oder zumindest ein drittes Signal auszugeben, wenn die initiierte Vorbereitung nicht fehlerlos beendet worden ist und der Tankvorgang nicht möglich ist. Das zumindest eine erste Signal, das zumindest eine zweite Signal und das zumindest eine dritte Signal sind sich voneinander unterscheidende visuelle und/oder akustische Signale.

Bei dem (Steuer-) Verfahren kann es sich um ein computer-implementiertes Verfahren handeln, d. h. einer, mehrere oder alle Schritte des Verfahrens können zumindest teilweise von einem Computer bzw. einer Vorrichtung zur Datenverarbeitung, optional der Steuervorrichtung, ausgeführt werden.

Das oben mit Bezug zur Steuervorrichtung und zum Kraftfahrzeug Beschriebene gilt analog auch für das Verfahren und umgekehrt.

Ferner wird ein Computerprogramm, umfassend Befehle, die bei der Ausführung des Programms durch einen Computer diesen veranlassen, das oben beschriebene Verfahren zumindest teilweise aus- bzw. durchzuführen, bereitgestellt.

Ein Programmcode des Computerprogramms kann in einem beliebigen Code vorliegen, insbesondere in einem Code, der für Steuerungen von Kraftfahrzeugen geeignet ist.

Das oben mit Bezug zur Steuervorrichtung, zum Kraftfahrzeug und zum Verfahren Beschriebene gilt analog auch für das Computerprogramm und umgekehrt.

Ferner wird ein computerlesbares Medium, insbesondere ein computerlesbares Speichermedium, bereitgestellt. Das computerlesbare Medium umfasst Befehle, die bei der Ausführung der Befehle durch einen Computer diesen dazu veranlassen, das oben beschriebene Verfahren zumindest teilweise aus- bzw. durchzuführen.

Das heißt, es kann ein computerlesbares Medium bereitgestellt werden, das ein oben definiertes Computerprogramm umfasst. Bei dem computerlesbaren Medium kann es sich um ein beliebiges digitales Datenspeichergerät handeln, wie zum Beispiel einen USB-Stick, eine Festplatte, eine CD-ROM, eine SD-Karte oder eine SSD-Karte (bzw. SSD-Laufwerk/SSD-Festplatte).

Das Computerprogramm muss nicht zwingend auf einem solchen computerlesbaren Speichermedium gespeichert sein, um dem Kraftfahrzeug zur Verfügung gestellt zu werden, sondern kann auch über das Internet oder anderweitig extern bezogen werden.

Das oben mit Bezug zum Verfahren, zur Steuervorrichtung, zum Computerprogramm und zum Kraftfahrzeug Beschriebene gilt analog auch für das computerlesbare Medium und umgekehrt.

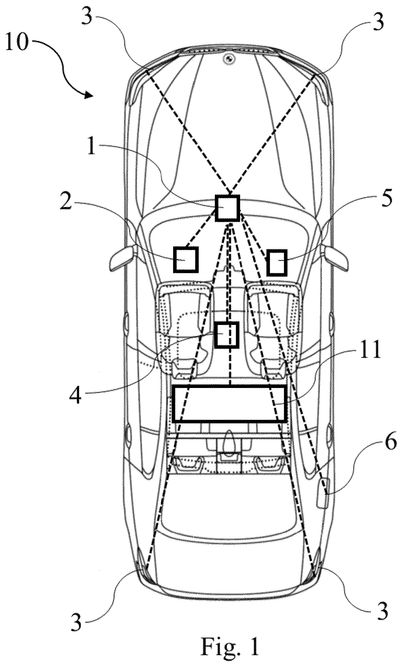

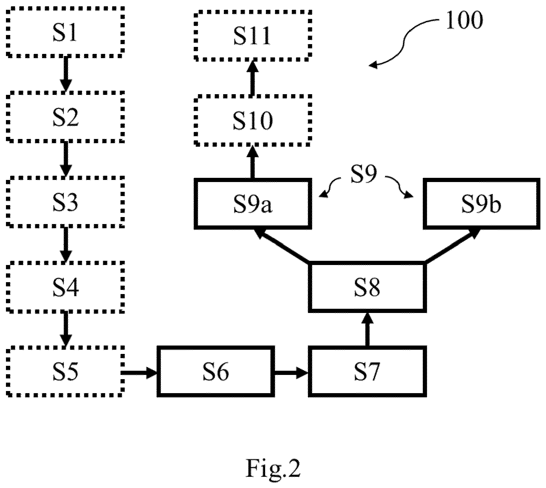

Nachfolgend wird eine optionale Ausführungsform mit Bezug zu Figuren 1 und 2 beschrieben.
- Fig. 1: zeigt schematisch ein offenbarungsgemäßes Kraftfahrzeug mit einer Steuervorrichtung zum Steuern eines Betriebs des Kraftfahrzeugs vor und während eines Tankvorgangs des Kraftfahrzeugs, und
- Fig. 2: zeigt schematisch ein Ablaufdiagramm eines offenbarungsgemäßen Verfahrens zum Steuern eines Betriebs des Kraftfahrzeugs vor und während eines Tankvorgangs des Kraftfahrzeugs.

Das in Figur 1 lediglich schematisch dargestellte Kraftfahrzeug 10 umfasst die Steuervorrichtung 1, zumindest eine Beleuchtungseinrichtung 3, 4 und zumindest eine Ausgabeeinrichtung 5, wobei die Steuervorrichtung 1 signaltechnisch mit der zumindest einen Beleuchtungseinrichtung 3, 4 und der zumindest einen Ausgabeeinrichtung 5 verbunden sein kann.

Die zumindest eine Beleuchtungseinrichtung 3, 4 kann eine Außenbeleuchtung 3 und eine Innenraumbeleuchtung 4 des Kraftfahrzeugs 10 umfassen, während die zumindest eine Ausgabeeinrichtung 5 z. B. eine Lautsprechereinrichtung umfassen kann.

Das Kraftfahrzeug 10 kann eine Tankklappe 6 umfassen, die an einer Außenseite des Kraftfahrzeugs 10 angeordnet sein kann.

Bei dem Kraftfahrzeug 10 kann es sich um ein Brennstoffzellenfahrzeug handeln, das ein Brennstoffzellensystem 11 als Teil des Antriebssystems umfassen kann. Entsprechend kann das Kraftfahrzeug 10 über die Tankklappe 6 z. B. mit Wasserstoff betankbar sein.

Ferner ist denkbar, dass das Kraftfahrzeug 10 eine Navigationsvorrichtung 2 umfassen kann. Die Navigationsvorrichtung 2 kann ausgestaltet sein, um eine aktuelle Position des Kraftfahrzeugs 10 und digitale Kartendaten bereitzustellen.

Zum Steuern eines Betriebs des Kraftfahrzeugs 10 vor und während eines Tankvorgangs des Kraftfahrzeugs 10 ist die Steuervorrichtung 1 ausgestaltet, um das nachfolgend auch mit Bezug zu Figur 2 im Detail beschriebene Verfahren 100 auszuführen.

Handelt es sich bei dem Kraftfahrzeug 10 um ein Brennstoffzellenfahrzeug 10, so ist denkbar, die folgenden fünf Schritte S1 bis S5 des Verfahrens 100 auszuführen, wobei sich das Brennstoffzellenfahrzeug 10 in einem Fahrbetrieb bzw. in Bewegung befindet.

Im ersten Schritt S1 kann eine aktuelle Position des Brennstoffzellenfahrzeugs 10 erhalten werden, während sich das Brennstoffzellenfahrzeug 10 im Fahrbetrieb befindet.

Im zweiten Schritt S2 können digitale Kartendaten abgerufen werden, wobei die digitalen Kartendaten Positionen von Wasserstofftankstellen anzeigen.

Im dritten Schritt S3 können anhand der erhaltenen aktuellen Position des Brennstoffzellenfahrzeugs 10 und der abgerufenen digitalen Kartendaten bestimmt werden, ob sich eine der Wasserstofftankstellen in einer Umgebung des Brennstoffzellenfahrzeugs 10 befindet und/oder das Brennstoffzellenfahrzeug 10 sich einer der Wasserstofftankstellen nähert.

Im vierten Schritt S4 kann ein potenziell bevorstehender Tankvorgang des Brennstoffzellenfahrzeugs 10 vorausgesagt werden, sofern bestimmt worden ist, dass sich eine der Wasserstofftankstellen in der Umgebung des Brennstoffzellenfahrzeugs 10 befindet und/oder das Brennstoffzellenfahrzeug 10 sich einer der Wasserstofftankstellen nähert.

Im fünften Schritt S5 kann ein Abschaltvorgang des Brennstoffzellensystems 11 des Brennstoffzellenfahrzeugs 10 initiiert werden, sofern der potenziell bevorstehende Tankvorgang vorausgesagt worden ist.

Dabei kann der Abschaltvorgang des Brennstoffzellensystems 11 derart initiiert werden, dass der Abschaltvorgang bei einer Ankunft an einer der Wasserstofftankstellen beendet ist und/oder ein Tankvorgang des Brennstoffzellenfahrzeugs bei einer Ankunft an einer der Wasserstofftankstellen ohne Wartezeit durchführbar.

Der Abschaltvorgang des Brennstoffzellensystems 11 kann z. B. in Abhängigkeit von einer Fahrgeschwindigkeit des Brennstoffzellenfahrzeugs 10, einer Reststrecke des Brennstoffzellenfahrzeugs 10 bis zu einer der Wasserstofftankstellen und/oder einer erwarteten Restfahrzeit des Brennstoffzellenfahrzeugs 10 zu einer der Wasserstofftankstellen initiiert werden, z. B. derart, dass der Schaltvorgang bei der Ankunft an einer der Wasserstofftankstellen beendet ist.

Ferner ist denkbar, den Abschaltvorgang des Brennstoffzellensystems 11 zu initiieren, sofern eine Traktionsbatterie des Brennstoffzellenfahrzeugs 10 einen ausreichenden Ladezustand zum Betreiben einer elektrischen Maschine des Brennstoffzellenfahrzeugs 10 zum Erreichen des Brennstoffzellenfahrzeugs 10 an einer der Wasserstofftankstellen aufweist.

Die folgenden Schritte S6 bis S11 des Verfahrens 100 können ausgeführt werden, wenn sich das Kraftfahrzeug 10 im Stillstand z. B. an einer Tankstelle bzw. einer Wasserstofftankstelle befindet. Zur Ausführung dieser Schritte S6 bis S11 ist nicht zwangsläufig notwendig, dass es sich bei dem Kraftfahrzeug 10 um ein Brennstoffzellenfahrzeug handelt, wie es bei dem vorherigen optionalen Schritten S1 bis S5 der Fall ist. Anders ausgedrückt, im Folgenden kann es sich bei dem Kraftfahrzeug 10 z. B. auch um ein Kraftfahrzeug mit einem Verbrennungsmotor oder ein batterieelektrisches Kraftfahrzeug handeln. Bei der Tankstelle kann es sich entsprechend auch um eine klassische Tankstelle für (z. B. fossile) Kraftstoffe und/oder eine elektrische Ladestation handeln.

Im sechsten Schritt S6 wird ein Wunsch zur Durchführung des Tankvorgangs erfasst. Dazu kann der Wunsch z. B. durch ein Erfassen eines Antippens und/oder Öffnungsversuchs einer Tankklappe 6 des Kraftfahrzeugs 10 erfasst werden. Beispielsweise kann ein bei einem Antippen der Tankklappe 6 erzeugtes Signal von der Tankklappe 6 bzw. einer Tankklappeneinrichtung des Kraftfahrzeugs 10 erhalten werden.

Im siebten Schritt S7 wird eine Vorbereitung des Kraftfahrzeugs 10 für den Tankvorgang initiiert, sobald der Wunsch zur Durchführung des Tankvorgangs erfasst worden ist.

Im achten Schritt S8 wird die zumindest eine Beleuchtungseinrichtung 3, 4 und/oder Ausgabeeinrichtung 5 des Kraftfahrzeugs 10 angesteuert, zumindest ein erstes Signal auszugeben, sobald die Vorbereitung initiiert worden ist.

Im neunten Schritt S9, welcher zwei alternative Schritte S9a und S9b umfasst, wird die zumindest eine Beleuchtungseinrichtung 3, 4 und/oder Ausgabeeinrichtung 5 angesteuert, entweder zumindest ein zweites Signal auszugeben, wenn die initiierte Vorbereitung fehlerlos beendet worden ist und der Tankvorgang begonnen werden kann (Schritt S9a), oder zumindest ein drittes Signal auszugeben, wenn die initiierte Vorbereitung nicht fehlerlos beendet worden ist und der Tankvorgang nicht möglich ist (Schritt S9b). Das zumindest eine erste Signal, das zumindest eine zweite Signal und das zumindest eine dritte Signal sind sich voneinander unterscheidende visuelle und/oder akustische Signale.

Handelt es sich bei dem Kraftfahrzeug 10 um ein Brennstoffzellenfahrzeug, so kann während der initiierten Vorbereitung überprüft werden, ob ein Abschaltvorgang des Brennstoffzellensystems 11 des Brennstoffzellenfahrzeugs, der z. B. gemäß dem vorherigen optionalen Schritten S1 bis S5 initiiert worden ist, fehlerlos beendet worden ist. Ist dies der Fall, d. h. sofern der Abschaltvorgang fehlerlos beendet worden ist, so kann festgestellt werden, dass die initiierte Vorbereitung fehlerlos beendet worden ist, und (optional sofern kein anderer Fehlerfall aufgetreten ist) die zumindest eine Beleuchtungseinrichtung 3, 4 und/oder Ausgabeeinrichtung 5 gemäß dem Schritt S9a angesteuert werden, das zumindest eine zweite Signal auszugeben. Ist dagegen ein Fehlerfall während des Abschaltvorgangs aufgetreten, so kann festgestellt werden, dass die initiierte Vorbereitung nicht fehlerlos beendet worden ist, und die zumindest eine Beleuchtungseinrichtung 3, 4 und/oder Ausgabeeinrichtung 5 kann gemäß dem Schritt S9b angesteuert werden, das zumindest eine dritte Signal auszugeben.

Im zehnten Schritt S10 kann ein Öffnen der Tanklappe 6 initiiert und/oder erlaubt werden, wenn die initiierte Vorbereitung fehlerlos beendet worden ist und der Tankvorgang begonnen werden kann. Das Öffnen kann z. B. gleichzeitig zur Ausgabe des zumindest einen zweiten Signals erfolgen. Somit kann der Tankvorgang des Kraftfahrzeugs 10 durchgeführt werden.

Nachdem der Tankvorgang beendet worden ist, kann im elften Schritt S11 die zumindest eine Beleuchtungseinrichtung 3, 4 und/oder Ausgabeeinrichtung 5 angesteuert werden, zumindest ein viertes Signal auszugeben. Das Ende des Tankvorgangs kann z. B. durch ein Schließen der Tankklappe 6 erfasst werden.

Wie zuvor erwähnt, handelt es sich bei dem bei dem zumindest einen ersten Signal, dem zumindest einen zweiten Signal und dem zumindest einen dritten Signal und optional dem zumindest einen vierten Signal um sich voneinander unterscheidende visuelle und/oder akustische Signale.

So kann die zumindest eine Beleuchtungseinrichtung 3, 4, welche die Außenbeleuchtung 3 und/oder die Innenraumbeleuchtung 4 umfasst, zur Ausgabe des zumindest einen ersten Signals, des zumindest einen zweiten Signals und des zumindest einen dritten Signals als sich voneinander unterscheidende visuelle Signale ausgestaltet sein. Alternativ, oder ergänzend, kann die zumindest eine Ausgabeeinrichtung 5, welche die Lautsprechereinrichtung 5 umfasst, zur Ausgabe des zumindest einen ersten Signals, des zumindest einen zweiten Signals und des zumindest einen dritten Signals als sich voneinander unterscheidende akustische Signale ausgestaltet sein.

Damit ein Nutzer, z. B. ein Fahrer des Kraftfahrzeugs 10, die Signale vor und während des Tankvorgangs wahrnehmen kann, wenn er sich an der Tankklappe 6 befindet, können das zumindest eine erste Signal, das zumindest eine zweite Signal und das zumindest eine dritte Signal außerhalb des Kraftfahrzeugs 10 und/oder an der Tankklappe 6 des Kraftfahrzeugs 10 wahrnehmbar sein.

So können die Schritte S6 bis S11 bei einer fehlerlosen Durchführung eines Tankvorgangs z. B. folgendermaßen ablaufen. Das Kraftfahrzeug 10 fährt an eine Tankstelle bzw. eine Zapfsäule, an der ein Nutzer bzw. der Fahrer des Kraftfahrzeugs 10 tanken möchte. Nachdem er das Kraftfahrzeug 10 abgestellt hat, steigt der Nutzer aus dem Kraftfahrzeug 10 aus, geht zur Tankklappe 6 und versucht diese z. B. durch ein Antippen zu öffnen. Durch diesen Versuch, die Tankklappe 6 zu öffnen, zeigt der Nutzer so seinen Wunsch zur Durchführung des Tankvorgangs an, die im sechsten Schritt S6 erfasst wird.

Durch den erfassten Wunsch wird die Vorbereitung wird die Vorbereitung für den Tankvorgang im siebten Schritt S7 initiiert und der Nutzer im achten Schritt S8 darüber informiert, in dem die zumindest eine Beleuchtungseinrichtung 3, 4 und/oder Ausgabeeinrichtung 5 (bzw. Lautsprechereinrichtung 5) angesteuert wird, das zumindest eine erste Signal auszugeben.

Das zumindest eine erste Signal kann ein Blinken der Außenbeleuchtung 3 und/oder der Innenraumbeleuchtung 4 mit einer vorgegebenen ersten Frequenz und/oder eine Ausgabe eines ersten Tons durch die Lautsprechereinrichtung 5 umfassen. Beispielsweise kann die Außenbeleuchtung 3 und die Innenraumbeleuchtung 4 gleichzeitig (bzw. synchron) mit der ersten Frequenz blinken, wobei denkbar ist, dass die Innenraumbeleuchtung 4 unterschiedliche Farben aufweist, z. B. mit blau-grüner Farbe blinkt.

Ist die initiierte Vorbereitung fehlerlos beendet worden, so wird gemäß dem Schritt S9a das zumindest eine zweite Signal ausgegeben, das sich von dem zumindest einen ersten Signal unterscheidet, sodass der Nutzer erkennt, dass er mit dem Tankvorgang beginnen kann. So kann er nun die Tankklappe 6 öffnen bzw. die Tankklappe öffnet automatisch (gemäß dem zehnten Schritt S10), sodass der Nutzer ein Zapfventil der Zapfsäule anschließen und den Tankvorgang beginnen kann.

Das zumindest eine zweite Signal kann ein dauerhaftes Aufleuchten der Außenbeleuchtung (z. B. während des gesamten Tankvorgangs) umfassen. Alternativ, oder ergänzend, kann das zumindest eine zweite Signal eine Ausgabe eines zweiten Tons durch die Lautsprechereinrichtung 5, der sich von dem ersten Ton unterscheidet, und/oder ein Aufflackern bzw. ein kurzes starkes Aufleuchten der Innenraumbeleuchtung 4 umfassen.

Die Vorbereitung für den Tankvorgang kann in ihrer Dauer variieren. Handelt es sich beispielsweise, wie oben beschrieben, bei dem Kraftfahrzeug 10 um ein Brennstoffzellenfahrzeug, so hängt die Vorbereitungsdauer u. a. von einem Abschaltvorgang des Brennstoffzellensystems 11 ab. Wurden z. B. die optionalen Schritte S1 bis S5 des Verfahrens 100 durchgeführt, so kann der Abschaltvorgang bereits bei Ankunft an der Tankstelle bzw. Wasserstofftankstelle beendet sein, sodass der Nutzer den Tankvorgang ohne Verzögerung beginnen kann, d. h. die Vorbereitungsdauer kann hier möglichst kurz, z. B. nur wenige Sekunden, ausfallen.

Ist jedoch der Abschaltvorgang des Brennstoffzellensystems 11 nicht vorausschauend gemäß den optionalen Schritten S1 bis S5 ausgeführt worden, so muss der Abschaltvorgang entsprechend während der Vorbereitung für den Tankvorgang erfolgen. Der Nutzer muss somit warten, bis er z. B. die Tankklappe 6 öffnen und den Tankvorgang beginnen kann.

Solange das zumindest eine dritte Signal nicht ausgegeben wird, weiß der Nutzer, dass die Vorbereitung für den Tankvorgang normal abläuft und er voraussichtlich gleich mit den Tankvorgang beginnen kann. Dabei ist gegebenenfalls denkbar, die Inszenierung, d. h. die Ausgabe der Signale leicht zu adaptieren, z. B. durch eine Farbanpassung.

Am Ende des Tankvorgangs nimmt der Nutzer das Zapfventil wieder ab und schließt die Tankklappe 6. Nachdem der Tankvorgang beendet worden ist, was. z. B. durch das Schließen der Tankklappe 6 erfasst wird, kann gemäß dem elften Schritt S11 schließlich das zumindest eine vierte Signal ausgegeben werden.

Das zumindest eine vierte Signal kann z. B. ein Ausschalten der Außenbeleuchtung 3, eine Ausgabe eines dritten Tons durch die Lautsprechereinrichtung 5, die sich von dem ersten und/oder zweiten Ton unterscheidet, und/oder ein Ausschalten oder zumindest einfaches Blinken der Innenraumbeleuchtung 4 umfassen. Der dritte Ton kann z. B. eine Bestätigungston sein, dass die Tankklappe geschlossen ist. Denkbar ist, dass die Lautsprechereinrichtung 5 ferner einen vierten Ton vor dem Ende des Tankvorgangs ausgibt, der sich von dem dritten Ton unterscheidet und z. B. eine Bestätigungston, dass der Tank des Kraftfahrzeugs 10 voll ist, sein kann.

Im Fehlerfall, wenn der Tankvorgang nicht möglich ist, können die Schritte S6 bis S8 zunächst wie zuvor beschrieben ablaufen.

Ist im Gegensatz zur beschriebenen fehlerlosen Durchführung des Tankvorgangs jedoch bei der initiierten Vorbereitung ein Fehlerfall aufgetreten, so wird anstatt des zumindest einen zweiten Signals das zumindest eine dritte Signal gemäß dem Schritt S9b ausgegeben, das sich von dem zumindest einen ersten Signal und dem zumindest einen zweiten Signal unterscheidet. Dadurch erkennt der Nutzer, dass der Tankvorgang nicht möglich ist und er gegebenenfalls Gegenmaßnahmen zur Fehlerbehebung einleiten muss. Entsprechend lässt sich die Tankklappe 6 auch weiterhin nicht öffnen bzw. öffnet auch nicht automatisch.

Das zumindest eine dritte Signal kann ein Blinken der Außenbeleuchtung 3 und/oder Innenraumbeleuchtung 4 mit einer vorgegebenen zweiten Sequenz, die sich von der ersten Frequenz unterscheidet, und optional ein anschließendes Ausschalten der Außenbeleuchtung 3 und/oder Innenraumbeleuchtung 4 umfassen. Alternativ, oder ergänzend kann das zumindest eine dritte Signal eine Ausgabe eines Warntons durch die Lautsprechereinrichtung 5 umfassen.

Zusätzlich ist denkbar, dass ein (nicht gezeigter) Bildschirm im Innenraum des Kraftfahrzeugs 10 eine Fehlermeldung und z. B. Informationen über den Fehlerfall und Anweisungen zur Fehlerbehebung ausgeben kann. So kann der Nutzer sowohl im Innenraum, wo er weitere Anweisungen erhalten kann, als auch an der Tankklappe 6 informiert werden, dass ein Fehlerfall vorliegt. Entsprechend kann er z. B. weitere Hilfe in Anspruch nehmen.

### Bezugszeichenliste

- 1: Steuervorrichtung
- 2: Navigationsvorrichtung
- 3: Beleuchtungseinrichtung, Außenbeleuchtung
- 4: Beleuchtungseinrichtung, Innenraumbeleuchtung
- 5: Ausgabeeinrichtung, Lautsprechereinrichtung
- 6: Tankklappe
- 10: Kraftfahrzeug, z. B. Brennstoffzellenfahrzeug
- 11: Brennstoffzellensystem

- 100: Verfahren
- S1-S11: Verfahrensschritte

## Patentansprüche

1. Steuervorrichtung (1) zum Steuern eines Betriebs eines Kraftfahrzeugs (10) vor und während eines Tankvorgangs des Kraftfahrzeugs (10), **dadurch gekennzeichnet, dass** die Steuervorrichtung (1) ausgestaltet ist, um:
- einen Wunsch zur Durchführung des Tankvorgangs zu erfassen (S6);
- eine Vorbereitung des Kraftfahrzeugs (10) für den Tankvorgang zu initiieren (S7), sobald der Wunsch zur Durchführung des Tankvorgangs erfasst worden ist;
- zumindest eine Beleuchtungseinrichtung (3, 4) und/oder Ausgabeeinrichtung (5) des Kraftfahrzeugs (10) anzusteuern (S8), zumindest ein erstes Signal auszugeben, sobald die Vorbereitung initiiert worden ist; und
- die zumindest eine Beleuchtungseinrichtung (3, 4) und/oder Ausgabeeinrichtung (5) anzusteuern (S9), entweder
- zumindest ein zweites Signal auszugeben (S9a), wenn die initiierte Vorbereitung fehlerlos beendet worden ist und der Tankvorgang begonnen werden kann, oder
- zumindest ein drittes Signal auszugeben (S9b), wenn die initiierte Vorbereitung nicht fehlerlos beendet worden ist und der Tankvorgang nicht möglich ist, wobei das zumindest eine erste Signal, das zumindest eine zweite Signal und das zumindest eine dritte Signal sich voneinander unterscheidende visuelle und/oder akustische Signale sind.

2. Steuervorrichtung (1) nach Anspruch 1, wobei das Kraftfahrzeug (10) ein Brennstoffzellenfahrzeug ist und die Steuervorrichtung (1) ausgestaltet ist, um:
- während der initiierten Vorbereitung zu überprüfen, ob ein Abschaltvorgang eines Brennstoffzellensystems (11) des Brennstoffzellenfahrzeugs fehlerlos beendet worden ist; und
- festzustellen, dass die initiierte Vorbereitung fehlerlos beendet worden ist, sofern der Abschaltvorgang fehlerlos beendet worden ist.

3. Steuervorrichtung (1) nach Anspruch 1 oder 2, wobei die Steuervorrichtung ausgestaltet ist, um:
- den Wunsch zur Durchführung des Tankvorgangs durch ein Erfassen eines Antippens und/oder Öffnungsversuchs einer Tankklappe (6) des Kraftfahrzeugs (10) zu erfassen.

4. Steuervorrichtung (1) nach einem der Ansprüche 1 bis 3, wobei das zumindest eine erste Signal, das zumindest eine zweite Signal und das zumindest eine dritte Signal außerhalb des Kraftfahrzeugs (10) und/oder an einer Tankklappe (6) des Kraftfahrzeugs (10) wahrnehmbar sind.

5. Steuervorrichtung nach einem der Ansprüche 1 bis 4, wobei die Steuervorrichtung (1) ausgestaltet ist, um:
- ein Öffnen einer Tanklappe (6) des Kraftfahrzeugs (10) zu initiieren und/oder zu erlauben (S10), wenn die initiierte Vorbereitung fehlerlos beendet worden ist und der Tankvorgang begonnen werden kann.

6. Steuervorrichtung (1) nach einem der Ansprüche 1 bis 5, wobei die Steuervorrichtung (1) ausgestaltet ist, um:
- die zumindest eine Beleuchtungseinrichtung (3, 4) und/oder Ausgabeeinrichtung (5) anzusteuern (S11), zumindest ein viertes Signal auszugeben, wenn der Tankvorgang beendet worden ist.

7. Steuervorrichtung nach einem der Ansprüche 1 bis 6, wobei
- die zumindest eine Beleuchtungseinrichtung (3, 4) eine Außenbeleuchtung (3) und/oder eine Innenraumbeleuchtung (4) des Kraftfahrzeugs (10) zur Ausgabe des zumindest einen ersten Signals, des zumindest einen zweiten Signals und des zumindest einen dritten Signals als sich voneinander unterscheidende visuelle Signale umfasst, und/oder
- die zumindest eine Ausgabeeinrichtung (5) eine Lautsprechereinrichtung (5) des Kraftfahrzeugs (10) zur Ausgabe des zumindest einen ersten Signals, des zumindest einen zweiten Signals und des zumindest einen dritten Signals als sich voneinander unterscheidende akustische Signale umfasst.

8. Kraftfahrzeug (10), wobei das Kraftfahrzeug (10) die Steuervorrichtung (1) nach einem der Ansprüche 1 bis 7 umfasst.

9. Verfahren (100) zum Steuern eines Betriebs eines Kraftfahrzeugs (10) vor und während eines Tankvorgangs des Kraftfahrzeugs (10) **dadurch gekennzeichnet, dass** das Verfahren (100) umfasst:
- Erfassen (S6) eines Wunschs zur Durchführung des Tankvorgangs;
- Initiieren (S7) einer Vorbereitung des Kraftfahrzeugs (10) für den Tankvorgang, sobald der Wunsch zur Durchführung des Tankvorgangs erfasst worden ist;
- Ansteuern (S8) zumindest einer Beleuchtungseinrichtung (3, 4) und/oder Ausgabeeinrichtung (5) des Kraftfahrzeugs (10), zumindest ein erstes Signal auszugeben, sobald die Vorbereitung initiiert worden ist; und
- Ansteuern (S9) der zumindest einen Beleuchtungseinrichtung (3, 4) und/oder Ausgabeeinrichtung (5), entweder
- zumindest ein zweites Signal auszugeben (S9a), wenn die initiierte Vorbereitung fehlerlos beendet worden ist und der Tankvorgang begonnen werden kann, oder
- zumindest ein drittes Signal auszugeben (S9b), wenn die initiierte Vorbereitung nicht fehlerlos beendet worden ist und der Tankvorgang nicht möglich ist, wobei das zumindest eine erste Signal, das zumindest eine zweite Signal und das zumindest eine dritte Signal sich voneinander unterscheidende visuelle und/oder akustische Signale sind.

10. Computerprogramm und/oder computerlesbares Medium, wobei das Computerprogramm und/oder das computerlesbare Medium Befehle umfasst, die bei der Ausführung der Befehle durch einen Computer diesen veranlassen, das Verfahren (100) nach Anspruch 9 auszuführen.

## Claims

1. Control device (1) for controlling the operation of a motor vehicle (10) before and during a refuelling process of the motor vehicle (10), **characterized in that** the control device (1) is designed to:
- detect (S6) a request to carry out the refuelling process;
- initiate (S7) the preparation of the motor vehicle (10) for the refuelling process as soon as the request to carry out the refuelling process has been detected;
- activate (S8) at least one lighting device (3, 4) and/or output device (5) of the motor vehicle (10) to output at least one first signal as soon as the preparation has been initiated; and
- activate (S9) the at least one lighting device (3, 4) and/or output device (5), either
- to output (S9a) at least one second signal if the initiated preparation has been completed without error and the refuelling process can be started, or
- to output (S9b) at least one third signal if the initiated preparation has not been completed without error and the refuelling process is not possible, the at least one first signal, the at least one second signal and the at least one third signal being visual and/or acoustic signals that differ from one another.

2. Control device (1) according to Claim 1, wherein the motor vehicle (10) is a fuel cell vehicle and the control device (1) is designed to:
- verify during the initiated preparation that a shutdown of a fuel cell system (11) of the fuel cell vehicle has been completed without error; and
- determine that the initiated preparation has been completed without error provided that the shutdown has been completed without error.

3. Control device (1) according to Claim 1 or 2, wherein the control device is configured to:
- detect the request to carry out the refuelling operation by detecting a tapping on and/or an attempt to open a fuel filler cap (6) of the motor vehicle (10).

4. Control device (1) according to one of Claims 1 to 3, wherein the at least one first signal, the at least one second signal and the at least one third signal are perceptible outside the motor vehicle (10) and/or on a fuel filler cap (6) of the motor vehicle (10).

5. Control device according to one of Claims 1 to 4, wherein the control device (1) is configured to:
- initiate and/or permit (S10) the opening of a fuel filler cap (6) of the motor vehicle (10) when the initiated preparation has been completed without error and the refuelling process can be started.

6. Control device (1) according to one of Claims 1 to 5, wherein the control device (1) is configured to:
- activate (S11) the at least one lighting device (3, 4) and/or output device (5) to output at least one fourth signal when the refuelling process has been completed.

7. Control device according to one of Claims 1 to 6, wherein
- the at least one lighting device (3, 4) comprises an exterior lighting (3) and/or an interior lighting (4) of the motor vehicle (10) for outputting the at least one first signal, the at least one second signal and the at least one third signal as visual signals that differ from one another, and/or
- the at least one output device (5) comprises a loudspeaker device (5) of the motor vehicle (10) for outputting the at least one first signal, the at least one second signal and the at least one third signal as acoustic signals that differ from one another.

8. Motor vehicle (10), wherein the motor vehicle (10) comprises the control device (1) according to one of Claims 1 to 7.

9. Method (100) for controlling the operation of a motor vehicle (10) before and during a refuelling process of the motor vehicle (10), **characterized in that** the method (100) comprises:
- detecting (S6) a request to carry out the refuelling process;
- initiating (S7) the preparation of the motor vehicle (10) for the refuelling process as soon as the request to carry out the refuelling process has been detected;
- activating (S8) at least one lighting device (3, 4) and/or output device (5) of the motor vehicle (10) to output at least one first signal as soon as the preparation has been initiated; and
- activating (S9) the at least one lighting device (3, 4) and/or output device (5), either
- to output (S9a) at least one second signal if the initiated preparation has been completed without error and the refuelling process can be started, or
- to output (S9b) at least one third signal if the initiated preparation has not been completed without error and the refuelling process is not possible, the at least one first signal, the at least one second signal and the at least one third signal being visual and/or acoustic signals that differ from one another.

10. Computer program and/or computer-readable medium, the computer program and/or the computer-readable medium comprising instructions that, when the instructions are executed by a computer, cause said computer to carry out the method (100) according to Claim 9.

## Revendications

1. Dispositif de commande (1) pour commander un fonctionnement d'un véhicule à moteur (10) avant et pendant un processus de ravitaillement du véhicule à moteur (10), **caractérisé en ce que** le dispositif de commande (1) est configuré pour :
- détecter une volonté d'effectuer le processus de ravitaillement (S6) ;
- initier (S7) une préparation du véhicule à moteur (10) au processus de ravitaillement dès que la volonté d'effectuer le processus de ravitaillement a été détectée ;
- piloter (S8) au moins un système d'éclairage (3, 4) et/ou un système de sortie (5) du véhicule à moteur (10), pour émettre au moins un premier signal dès que la préparation a été initiée ; et
- piloter (S9) l'au moins un système d'éclairage (3, 4) et/ou système de sortie (5), soit
- pour émettre (S9a) au moins un deuxième signal lorsque la préparation initiée s'est terminée sans erreur et que le processus de ravitaillement peut être démarré, soit
- pour émettre (S9b) au moins un troisième signal lorsque la préparation initiée ne s'est pas terminée sans erreur et que le processus de ravitaillement n'est pas possible, l'au moins un premier signal, l'au moins un deuxième signal et l'au moins un troisième signal étant des signaux visuels et/ou acoustiques différents les uns des autres.

2. Dispositif de commande (1) selon la revendication 1, le véhicule à moteur (10) étant un véhicule à pile à combustible et le dispositif de commande (1) étant configuré pour :
- vérifier pendant la préparation initiée si un processus d'arrêt d'un système de pile à combustible (11) du véhicule à pile à combustible s'est terminé sans erreur ; et
- constater que la préparation initiée s'est terminée sans erreur dans la mesure où le processus d'arrêt s'est terminé sans erreur.

3. Dispositif de commande (1) selon la revendication 1 ou 2, le dispositif de commande étant configuré pour :
- détecter la volonté d'effectuer le processus de ravitaillement en détectant un contact avec et/ou une tentative d'ouverture d'une trappe de réservoir (6) du véhicule à moteur (10).

4. Dispositif de commande (1) selon l'une des revendications 1 à 3, l'au moins un premier signal, l'au moins un deuxième signal et l'au moins un troisième signal étant perceptibles à l'extérieur du véhicule à moteur (10) et/ou sur une trappe de réservoir (6) du véhicule à moteur (10).

5. Dispositif de commande selon l'une des revendications 1 à 4, le dispositif de commande (1) étant configuré pour :
- initier et/ou permettre (S10) une ouverture d'une trappe de réservoir (6) du véhicule à moteur (10) lorsque la préparation initiée s'est terminée sans erreur et que le processus de ravitaillement peut être démarré.

6. Dispositif de commande (1) selon l'une des revendications 1 à 5, le dispositif de commande (1) étant configuré pour :
- piloter (S11) l'au moins un système d'éclairage (3, 4) et/ou système de sortie (5) pour émettre au moins un quatrième signal lorsque le processus de ravitaillement s'est terminé.

7. Dispositif de commande selon l'une des revendications 1 à 6,
- l'au moins un système d'éclairage (3, 4) comprenant un éclairage extérieur (3) et/ou un éclairage d'espace intérieur (4) du véhicule à moteur (10) pour émettre l'au moins un premier signal, l'au moins un deuxième signal et l'au moins un troisième signal en tant que signaux visuels différents les uns des autres, et/ou
- l'au moins un système de sortie (5) comprenant un système de haut-parleur (5) du véhicule à moteur (10) pour émettre l'au moins un premier signal, l'au moins un deuxième signal et l'au moins un troisième signal sous forme de signaux acoustiques différents les uns des autres.

8. Véhicule à moteur (10), le véhicule à moteur (10) comprenant le dispositif de commande (1) selon l'une des revendications 1 à 7.

9. Procédé (100) pour commander un fonctionnement d'un véhicule à moteur (10) avant et pendant un processus de ravitaillement du véhicule à moteur (10), **caractérisé en ce que** le procédé (100) comprend :
- détection (S6) d'une volonté d'effectuer le processus de ravitaillement ;
- initiation (S7) d'une préparation du véhicule à moteur (10) au processus de ravitaillement dès que la volonté d'effectuer le processus de ravitaillement a été détectée ;
- pilotage (S8) d'au moins un système d'éclairage (3, 4) et/ou système de sortie (5) du véhicule à moteur (10) pour émettre au moins un premier signal dès que la préparation a été initiée ; et
- pilotage (S9) de l'au moins un système d'éclairage (3, 4) et/ou système de sortie (5), soit
- pour émettre (S9a) au moins un deuxième signal lorsque la préparation initiée s'est terminée sans erreur et que le processus de ravitaillement peut être démarré, soit
- pour émettre (S9b) au moins un troisième signal lorsque la préparation initiée ne s'est pas terminée sans erreur et que le processus de ravitaillement n'est pas possible, l'au moins un premier signal, l'au moins un deuxième signal et l'au moins un troisième signal étant des signaux visuels et/ou acoustiques différents les uns des autres.

10. Programme informatique et/ou support lisible par ordinateur, le programme informatique et/ou le support lisible par ordinateur comprenant des instructions qui, lorsque les instructions sont exécutées par un ordinateur, amènent celui-ci à exécuter le procédé (100) selon la revendication 9.
